# EUROPÄISCHE PATENTANMELDUNG

(11) **EP 1 939 486 A1**
(43) Veröffentlichungstag der Anmeldung: **02.07.2008**
(21) Anmeldenummer: 07023831.6
(22) Anmeldetag: 10.12.2007
(51) Int. Cl.: F16F 15/139

(54) **Vorrichtung zum Dämpfen von Torsionsschwingungen**

(30) Priorität: 27.12.2006 DE 102006061543
(71) Anmelder: LuK Lamellen und Kupplungsbau Beteiligungs KG, 77815 Bühl (DE)
(72) Erfinder: Mán, Lászlo, Dr., 77833 Ottersweier-Unzhurst (DE)

(57) **Zusammenfassung**

Die Erfindung betrifft eine Vorrichtung zum Dämpfen von Torsionsschwingungen mit zwei koaxial angeordneten Teilen, nämlich einem Eingangs- und einem Ausgangsteil, und mit zwischen den beiden Teilen vorgesehenen in Umfangsrichtung wirksamen Federn, die in einem ringförmigen Bauraum des einen Teils abgestützt sind und deren Endbereiche von Anschlagkonturen des anderen Teils beaufschlagbar sind, und mit einer mit den Federn gekoppelten Reibeinrichtung, die durch eine Federeinrichtung in axialer Richtung beaufschlagt ist, um eine Rutschkupplung zu bilden.

Die Erfindung zeichnet sich dadurch aus, dass die Federeinrichtung eine Tellerfeder umfasst, die sich seitlich der in Umfangsrichtung wirksamen Federn in radialer Richtung erstreckt.

## Beschreibung

Die Erfindung betrifft eine Vorrichtung zum Dämpfen von Torsionsschwingungen mit zwei koaxial angeordneten Teilen, nämlich einem Eingangs- und einem Ausgangsteil, und mit zwischen den beiden Teilen vorgesehenen in Umfangsrichtung wirksamen Federn, die in einem ringförmigen Bauraum des einen Teils abgestützt sind und deren Endbereiche von Anschlagkonturen des anderen Teils beaufschlagbar sind, und mit einer mit den Federn gekoppelten Reibeinrichtung, die durch eine Federeinrichtung in axialer Richtung beaufschlagt ist, um eine Rutschkupplung zu bilden.

Aus der europäischen Patentanmeldung EP 0 321 697 A2 ist ein geteiltes Schwungrad mit zwei gleichachsigen Schwungradelementen bekannt. Das geteilte Schwungrad umfasst zwischen Ringscheiben und einem Ringteil eingesetzte Reiblamellen. Ein weiteres Ringteil ist an einem der Schwungradelemente undrehbar gehaltert und durch eine Ringfeder beaufschlagt. Aus der deutschen Patentschrift DE 39 30 715 C2 ist ein Zweimassenschwungrad mit einem Federaggregat zum Übertragen des Drehmoments und einer mit dem Federaggregat in Reihe geschalteten schlupffähigen Reibeinrichtung bekannt. Aus der deutschen Patentschrift DE 40 35 320 C2 ist ein geteiltes Schwungrad mit Federn und zwei durch Federmaterial gebildeten Einlagen bekannt, zwischen denen ein Reibfluss erzeugt wird. Aus der deutschen Patentschrift DE 40 40 605 B4 ist eine Vorrichtung zum Dämpfen von Torsionsschwingungen bekannt, die in sich elastisch federnd verspannte eingebaute Bauteile umfasst, die eine zu ihrer Verspannung dienende Federkraft selbst erzeugen.

Aufgabe der Erfindung ist es, eine Vorrichtung gemäß dem Oberbegriff des Anspruchs 1 zu schaffen, die einfach aufgebaut und kostengünstig herstellbar ist.

Die Aufgabe ist bei einer Vorrichtung zum Dämpfen von Torsionsschwingungen mit zwei koaxial angeordneten Teilen, nämlich einem Eingangs- und einem Ausgangsteil, und mit zwischen den beiden Teilen vorgesehenen in Umfangsrichtung wirksamen Federn, die in einem ringförmigen Bauraum des einen Teils abgestützt sind und deren Endbereiche von Anschlagkonturen des anderen Teils beaufschlagbar sind, und mit einer mit den Federn gekoppelten Reibeinrichtung, die durch eine Federeinrichtung in axialer Richtung beaufschlagt ist, um eine Rutschkupplung zu bilden, dadurch gelöst, dass die Federeinrichtung eine Tellerfeder umfasst, die sich seitlich der in Umfangsrichtung wirksamen Federn in radialer Richtung erstreckt. Das liefert den Vorteil, dass die das Rutschmoment bestimmende Tellerfeder verhältnismäßig Platz sparend und dennoch radial breit ausgeführt werden kann. Dadurch kann eine optimale Tellerfederkennlinie realisiert werden. Insbesondere kann durch eine symmetrische Krafteinleitung zwischen den in Umfangrichtung wirksamen Federn weniger Verschleiß und dadurch mehr Funktionssicherheit gewährleistet werden.

Ein bevorzugtes Ausführungsbeispiel der Vorrichtung ist dadurch gekennzeichnet, dass die Tellerfeder in radialer Richtung so breit ausgeführt ist, dass die zugehörige Tellerfederkennlinie einen Bereich aufweist, in dem die Tellerfederkraft über dem Tellerfederweg praktisch konstant ist beziehungsweise nur eine verhältnismäßig geringe Veränderung erfährt. Dadurch wird gewährleistet, dass das übertragbare Drehmoment auch bei Verschleiß, der zum Beispiel an Reibflächen der Rutschkupplung auftritt, konstant bleibt beziehungsweise nur geringfügig variiert.

Ein weiteres bevorzugtes Ausführungsbeispiel der Vorrichtung ist dadurch gekennzeichnet, dass die Tellerfeder die Gestalt einer Kreisringscheibe aufweist, die, im Querschnitt betrachtet, einen gekrümmten Bereich aufweist, dessen Krümmung an die Gestalt der in Umfangsrichtung wirksamen Federn angepasst ist. Vorzugsweise entspricht der Krümmungsradius des gekrümmten Bereichs etwa dem äußeren Windungsradius der in Umfangsrichtung wirksamen Federn.

Ein weiteres bevorzugtes Ausführungsbeispiel der Vorrichtung ist dadurch gekennzeichnet, dass die Tellerfeder radial innen eine Innverzahnung aufweist, die in eine Außenverzahnung eingreift, die an dem einen Teil vorgesehen ist. Dadurch wird auf einfache Art und Weise eine drehfeste Verbindung zwischen der Tellerfeder und dem einen Teil geschaffen. Die Tellerfeder mit der Innenverzahnung ist vorzugsweise aus einem Blechteil geformt, insbesondere geprägt.

Ein weiteres bevorzugtes Ausführungsbeispiel der Vorrichtung ist dadurch gekennzeichnet, dass die Innenverzahnung der Tellerfeder und/oder die Außenverzahnung des einen Teils in axialer Richtung konisch ausgebildete Zähne aufweisen/aufweist. Das liefert den Vorteil, dass die beiden Verzahnungen klapperfrei miteinander in Eingriff gebracht werden, wenn die Tellerfeder in axialer Richtung auf das eine Teil zu bewegt wird.

Ein weiteres bevorzugtes Ausführungsbeispiel der Vorrichtung ist dadurch gekennzeichnet, dass die Tellerfeder unter Vorspannung eingebaut ist. Dadurch wird die Tellerfeder in axialer Richtung gegen das eine Teil vorgespannt.

Ein weiteres bevorzugtes Ausführungsbeispiel der Vorrichtung ist dadurch gekennzeichnet, dass die Tellerfeder mit einem äußeren Umfangsrand an einem Reibring anliegt, der radial außerhalb der in Umfangsrichtung wirksamen Federn in dem einen Teil angeordnet ist. Der Reibring ist durch die Tellerfeder in axialer Richtung gegen das eine Teil vorgespannt.

Ein weiteres bevorzugtes Ausführungsbeispiel der Vorrichtung ist dadurch gekennzeichnet, dass die in Umfangrichtung wirksamen Federn in den Reibring eingehängt sind. Durch das Einhängen der Federn wird eine Bewegung der Federn in Umfangsrichtung auf den Reibring übertragen.

Ein weiteres bevorzugtes Ausführungsbeispiel der Vorrichtung ist dadurch gekennzeichnet, dass die in Umfangrichtung wirksamen Federn an dem Reibring abgestützt sind. Vorzugsweise übernimmt der Reibring zusätzlich die Funktion einer Gleitschale zwischen den in Umfangsrichtung wirksamen Federn und dem einen Teil.

Ein weiteres bevorzugtes Ausführungsbeispiel der Vorrichtung ist dadurch gekennzeichnet, dass die Gestalt des Reibrings radial innen an die Gestalt der in Umfangsrichtung wirksamen Federn und radial außen an die Gestalt des einen Teils angepasst ist. Der Reibring hat im Wesentlichen einen rechteckförmigen Querschnitt, der auf einer den in Umfangsrichtung wirksamen Federn zugewandten Seite eine kreissegmentförmige Vertiefung aufweist.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Es zeigen:
- Figur 1: eine erfindungsgemäße Dämpfungsvorrichtung im Halbschnitt;
- Figur 2: einen vergrößerten Ausschnitt aus Figur 1 in perspektivischer Darstellung;
- Figur 3: eine Tellerfeder der in den Figuren 1 und 2 dargestellten Dämpfungsvorrichtung und
- Figur 4: ein Gehäuseteil eines Eingangsteils der in den Figuren 1 und 2 dargestellten Dämpfungsvorrichtung.

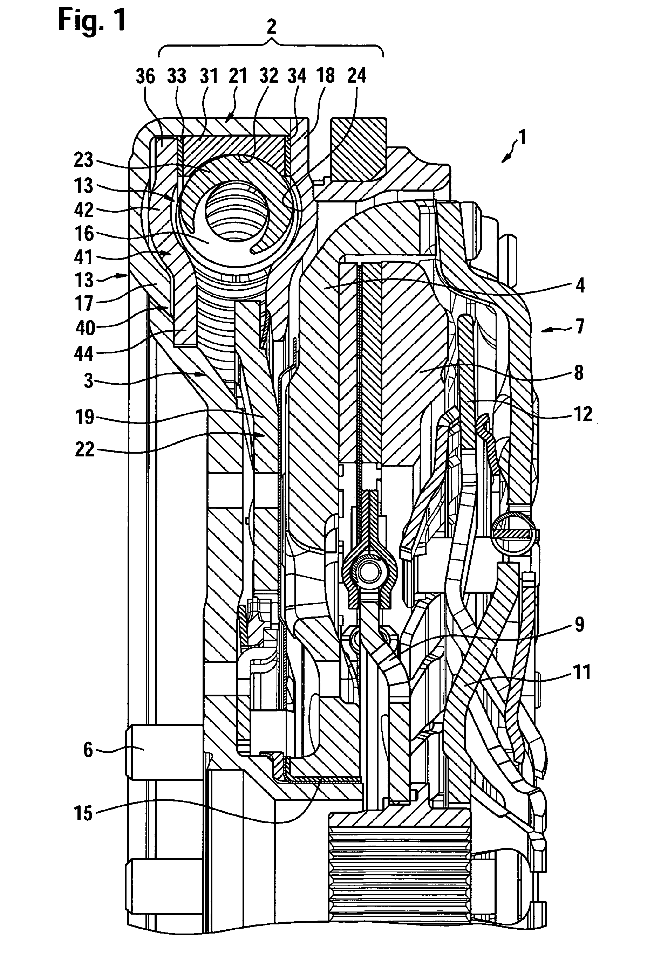

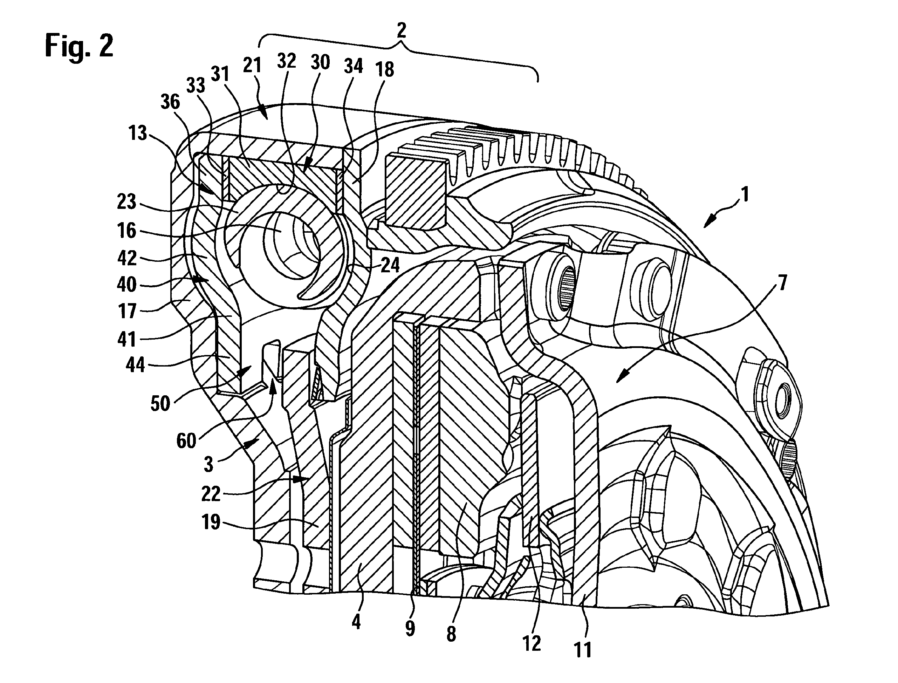

In den Figuren 1 und 2 ist eine Drehmomentübertragungseinrichtung 1 zum Kompensieren von Drehstößen in verschiedenen Ansichten dargestellt. Die Drehmomentübertragungseinrichtung 1 umfasst ein Schwungrad 2, das in zwei Schwungradelemente 3 und 4 aufgeteilt ist. Das Schwungradelement 3 ist auf einer Kurbelwelle einer nicht näher dargestellten Brennkraftmaschine über Befestigungsschrauben 6 befestigt.

Auf dem Schwungradelement 4 ist eine schaltbare Reibungskupplung 7 mit einer Druckplatte 8 befestigt. Zwischen der Druckplatte 8 der Reibungskupplung 7 und dem Schwungradelement 4 ist eine Kupplungsscheibe 9 vorgesehen, die drehfest mit einer Eingangswelle eines nicht näher dargestellten Getriebes verbunden ist. Die Druckplatte 8 der Reibungskupplung 7 wird in Richtung des Schwungradelements 4 durch eine sich an einem Kupplungsdeckel 11 schwenkbar abstützende Tellerfeder 12 beaufschlagt.

Zwischen dem Schwungradelement 3 und dem Schwungradelement 4 ist eine Vorrichtung 13 zum Dämpfen von Torsionsschwingungen vorgesehen, die eine Relativverdrehung zwischen den beiden Schwungradelementen 3 und 4 ermöglicht. Die beiden Schwungradelemente 3 und 4 sind durch eine Lagerung 15 zueinander verdrehbar koaxial positioniert.

Das Schwungradelement 3, welches das Eingangsteil 21 der Dämpfungsvorrichtung 13 darstellt, bildet ein Gehäuse, das eine in Umfangsrichtung ringförmige Kammer 16 begrenzt, in der die Dämpfungseinrichtung 13 aufgenommen ist. Das die ringförmige Kammer 16 aufweisende Schwungradelement 3 besteht im Wesentlichen aus zwei Gehäuseteilen 17, 18, die radial außen dicht miteinander verbunden sind.

Ein radialer Flansch 19 stellt das Ausgangsteil 22 der Dämpfungsvorrichtung 13 dar und ist axial zwischen den beiden vorzugsweise aus Blech hergestellten Gehäuseteilen 17, 18 angeordnet. Der Flansch 19 ist drehfest mit dem Schwungradelement 4 verbunden.

Der Flansch 19 weist an seinem Außenumfang radiale Ausleger auf, die Beaufschlagungsbereiche für Kraftspeicher in Form von Schraubenfedern 23 der Dämpfungsvorrichtung 13 bilden. Die beiden Gehäuseteile 17, 18 sind vorzugsweise derart geformt, dass sie radial außen eine ringkanalartige beziehungsweise torusähnliche Aufnahme 24 bilden, in denen die Federn 23 aufgenommen sind. Die ringkanalartige Aufnahme 24 ist durch sich über den gesamten Umfang erstreckende, axiale Einbuchtungen beziehungsweise Einprägungen, die in die Gehäuseteile 17, 18 eingebracht sind, gebildet.

In die Torsionsschwingungsdämpfungsvorrichtung 13 ist eine Reibeinrichtung 30 integriert. Die Reibeinrichtung 30 umfasst einen Reibring 31, der mit den Federn 23 gekoppelt ist. Zu diesem Zweck kann der Reibring 31 zwischen den Enden zweier benachbarter Federn 23 axiale Anformungen beziehungsweise Einprägungen aufweisen, die sich axial zwischen zwei benachbarten Federn erstrecken und zur Abstützung dieser Federn in Umfangsrichtung dienen. Anstatt der Anformungen können zur Bildung von Umfangsanschlägen für die Federn 23 auch Einzelelemente an dem Reibring 31 befestigt werden. Darüber hinaus könnte der Reibring, anstatt sich einteilig über den gesamten Umfang zu erstrecken, in einzelne sektorförmige beziehungsweise segmentartige Einzelreibelemente unterteilt sein.

Der Reibring 31 hat einen im Wesentlichen rechteckigen Querschnitt, der an der den Federn 23 zugewandten Längsseite mit einer kreissegmentartigen Vertiefung 32 versehen ist. Die gegenüberliegende Längsseite des rechteckigen Querschnitts des Reibrings 31 liegt an dem Gehäuseteil 17 des Eingangsteils 21 an. An den beiden kurzen Seiten des rechteckigen Querschnitts des Reibrings 31 ist jeweils ein Reibbelag 33, 34 befestigt. Die Befestigung der Reibbeläge 33, 34 erfolgt vorzugsweise durch Kleben. Der Reibbelag 34 befindet sich in Anlage an dem Gehäuseteil 18 des Eingangsteils 21. An dem Reibbelag 33 befindet sich ein radial äußerer Umfangsrand 36 einer Federeinrichtung 40 in Anlage.

Bei der Federeinrichtung 40 handelt es sich um eine Tellerfeder 41, die im Anschluss an den Umfangsrand 36 einen gekrümmten Bereich 42 aufweist. Die Krümmung des gekrümmten Bereichs 42 ist an die Krümmung der Windungen der Federn 23 angepasst. Durch den gekrümmten Bereich 42 ist der radial äußere Umfangsrand 36 mit einem radial inneren Umfangsrand 44 einstückig verbunden. Der radial innere Umfangsrand 44 ist mit einer Innenverzahnung 50 versehen, die sich mit einer Außenverzahnung 60 in Eingriff befindet, die an dem Gehäuseteil 17 des Eingangsteils 21 ausgebildet ist.

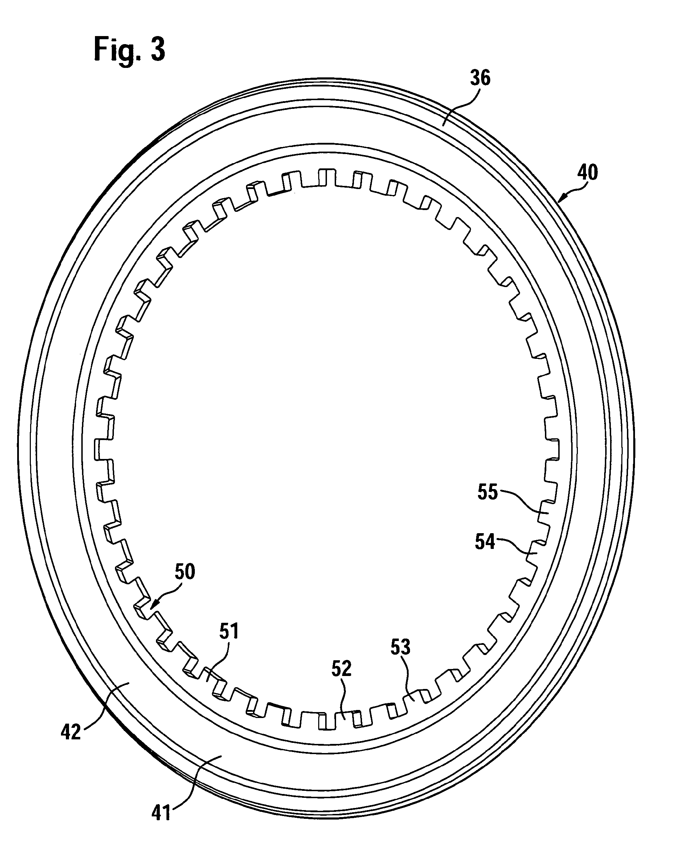

In Figur 3 ist die Tellerfeder 41 allein perspektivisch dargestellt. In dieser Darstellung sieht man, dass die Innenverzahnung 50 eine Vielzahl von sich radial nach innen erstreckenden, im Wesentlichen quaderförmigen, Zähnen 51 bis 55 aufweist. Die Zähne 51 bis 55 sind in axialer Richtung, das heißt parallel zur Drehachse der Torsionsschwingungsdämpfungsvorrichtung, konisch ausgeführt. Die konisch ausgeführten, vorzugsweise geprägten Zähne 51 bis 55 sind in die komplementär geformte Außenverzahnung 60 des Gehäuseteils 17 eingehängt. Die Tellerfeder 41 dient dazu, den Reibring 31 axial in dem Gehäuse der Drehschwingungsdämpfungseinrichtung 13 einzuspannen. Durch die konisch gestaltete und vorgespannte Mitnehmerverzahnung wird eine spielfreie und dadurch geräuschlose Drehmomentübertragung zwischen der Tellerfeder 41 und dem Gehäuse der Torsionsschwingungsdämpfungsvorrichtung 13 gewährleistet.

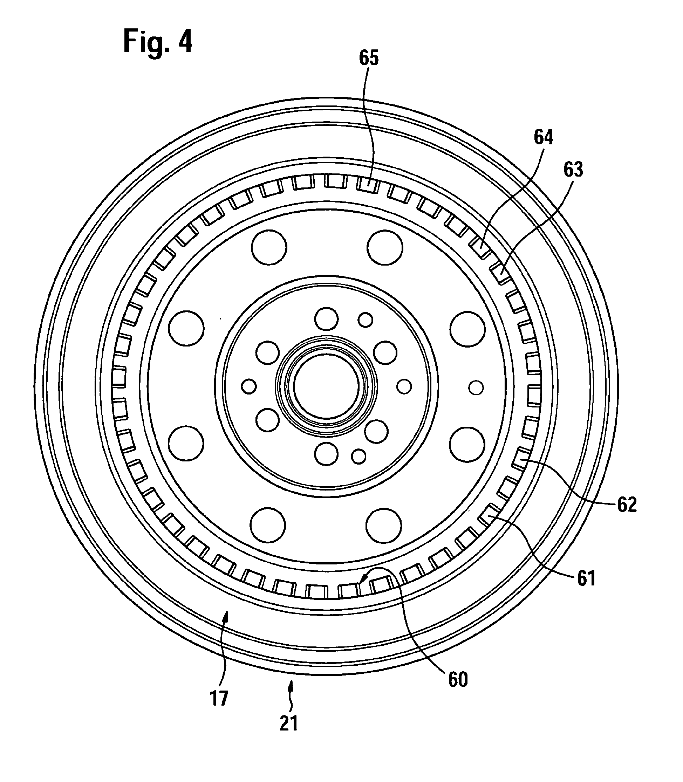

In Figur 4 ist das Gehäuseteil 17 des Eingangsteils 21 in der Draufsicht dargestellt. In der Draufsicht sieht man, dass die Außenverzahnung 60 eine Vielzahl von sich radial nach außen erstreckenden zahnförmigen Aussparungen 61 bis 65 umfasst. Das Gehäuseteil 17 wird bei der Herstellung gemäß einem weiteren Aspekt der Erfindung innen rotationssymmetrisch ausgedreht, bis die minimale Wandstärke bezüglich der nötigen Festigkeit erreicht wird. Die abgedrehte Masse wird durch die Tellerfeder 41 ersetzt, die neben den Federn 23, die auch als Bogenfedern bezeichnet werden, in der Aufnahme 24, die auch als Bogenfederkanal bezeichnet wird, angeordnet ist.

### Bezugszeichenliste

- 1.: Drehmomentübertragungseinrichtung
- 2.: Schwungrad
- 3.: Schwungradelement
- 4.: Schwungradelement
- 6.: Befestigungsschrauben
- 7.: Reibungskupplung
- 8.: Druckplatte
- 9.: Kupplungsscheibe
- 11.: Kupplungsdeckel
- 12.: Tellerfeder
- 13.: Vorrichtung
- 15.: Lagerung
- 16.: ringförmige Kammer
- 17.: Gehäuseteil
- 18.: Gehäuseteil
- 19.: Flansch
- 21.: Eingangsteil
- 22.: Ausgangsteil
- 23.: Schraubenfedern
- 24.: Aufnahme
- 30.: Reibeinrichtung
- 31.: Reibring
- 32.: Vertiefung
- 33.: Reibbelag
- 34.: Reibbelag
- 36.: Umfangsrand
- 40.: Federeinrichtung
- 41.: Tellerfeder
- 42.: gekrümmter Bereich
- 44.: Umfangsrand
- 50.: Innenverzahnung
- 51.: Zähne
- 52.: Zähne
- 53.: Zähne
- 54.: Zähne
- 55.: Zähne
- 60.: Außenverzahnung
- 61.: Zähne
- 62.: Zähne
- 63.: Zähne
- 64.: Zähne
- 65.: Zähne

## Patentansprüche

1. Vorrichtung zum Dämpfen von Torsionsschwingungen mit zwei koaxial angeordneten Teilen, nämlich einem Eingangs- (21) und einem Ausgangsteil (22), und mit zwischen den beiden Teilen (21,22) vorgesehenen in Umfangsrichtung wirksamen Federn (23), die in einem ringförmigen Bauraum des einen Teils (21) abgestützt sind und deren Endbereiche von Anschlagkonturen des anderen Teils (22) beaufschlagbar sind, und mit einer mit den Federn (23) gekoppelten Reibeinrichtung (30), die durch eine Federeinrichtung (40) in axialer Richtung beaufschlagt ist, um eine Rutschkupplung zu bilden, **dadurch gekennzeichnet, dass** die Federeinrichtung (40) eine Tellerfeder (41) umfasst, die sich seitlich der in Umfangsrichtung wirksamen Federn (23) in radialer Richtung erstreckt.

2. Vorrichtung nach Anspruch 1, **dadurch gekennzeichnet, dass** die Tellerfeder (41) in radialer Richtung so breit ausgeführt ist, dass die zugehörige Tellerfederkennlinie einen Bereich aufweist, in dem die Tellerfederkraft über dem Tellerfederweg praktisch konstant ist beziehungsweise nur eine verhältnismäßig geringe Veränderung erfährt.

3. Vorrichtung nach einem der vorhergehenden Ansprüche, **dadurch gekennzeichnet, dass** die Tellerfeder (41) die Gestalt einer Kreisringscheibe aufweist, die, im Querschnitt betrachtet, einen gekrümmten Bereich (42) aufweist, dessen Krümmung an die Gestalt der in Umfangsrichtung wirksamen Federn (23) angepasst ist.

4. Vorrichtung nach einem der vorhergehenden Ansprüche, **dadurch gekennzeichnet, dass** die Tellerfeder (41) radial innen eine Innenverzahnung (50) aufweist, die in eine Außenverzahnung (60) eingreift, die an dem einen Teil (21) vorgesehen ist.

5. Vorrichtung nach Anspruch 4, **dadurch gekennzeichnet, dass** die Innenverzahnung (50) der Tellerfeder (41) und/oder die Außenverzahnung (60) des einen Teils (21) in axialer Richtung konisch ausgebildete Zähne (51-55,61-66) aufweisen/aufweist.

6. Vorrichtung nach einem der vorhergehenden Ansprüche, **dadurch gekennzeichnet, dass** die Tellerfeder (41) unter Vorspannung eingebaut ist.

7. Vorrichtung nach einem der vorhergehenden Ansprüche, **dadurch gekennzeichnet, dass** die Tellerfeder (41) mit einem äußeren Umfangsrand (36) an einem Reibring (31) anliegt, der radial außerhalb der in Umfangsrichtung wirksamen Federn (23) in dem einen Teil (21) angeordnet ist.

8. Vorrichtung nach Anspruch 7, **dadurch gekennzeichnet, dass** die in Umfangsrichtung wirksamen Federn (23) in den Reibring (31) eingehängt sind.

9. Vorrichtung nach Anspruch 7 oder 8, **dadurch gekennzeichnet, dass** die in Umfangsrichtung wirksamen Federn (23) an dem Reibring (31) abgestützt sind.

10. Vorrichtung nach einem der Ansprüche 7 bis 9, **dadurch gekennzeichnet, dass** die Gestalt des Reibrings (31) radial innen an die Gestalt der in Umfangsrichtung wirksamen Federn (23) und radial außen an die Gestalt des einen Teils (21) angepasst ist.
